# EUROPÄISCHE PATENTANMELDUNG

(11) **EP 2 364 937 A2**
(43) Veröffentlichungstag der Anmeldung: **14.09.2011**
(21) Anmeldenummer: 11156803.6
(22) Anmeldetag: 03.03.2011
(51) Int. Cl.: B65G 67/24

(54) **Schüttgut-Fördereinheit**

(30) Priorität: 12.03.2010 DE 102010015943; 08.04.2010 DE 102010016364
(71) Anmelder: Balzer, Hans, 87700 Memmingen (DE)
(72) Erfinder: Balzer, Hans, 87700 Memmingen (DE)
(74) Vertreter: Popp, Eugen

(57) **Zusammenfassung**

Es wird eine Schüttgut-Fördereinheit (1) vorgeschlagen, aufweisend:
- eine in eine Bodenausnehmung (24) einsetzbare ein- oder mehrteilige Kassette (3) aus Stahl oder dergleichen, mit zwei Längsseitenwänden (15,15'), endseitig angeordneten Stirnseitenwänden (17,17'), einem Boden (19), sowie mit einer dem Boden gegenüberliegenden Zugangsöffnung (43) zum Inneren der Kassette (3);
- einen in der Kassette (3) angeordneten Schüttgutaufnahmebehälter (5) zur Aufnahme von Schüttgut, welches durch die Zugangsöffnung (43) der Kassette (3) maschinell oder manuell zuführbar ist, und
- wenigstens ein Fördermittel zum Transport von in dem Schüttgutaufnahmebehälter (5) befindlichem Schüttgut im Wesentlichen entlang einer Längsrichtung (L) der Kassette (3).

## Beschreibung

Die Erfindung betrifft eine Schüttgut-Fördereinheit nach Anspruch 1.

Es ist bekannt, dass Harnstoff in großen Mengen industriell hergestellt wird und z. B. als Stickstoffdünger dient. Harnstoff kann u. a. aus tierischen Ausscheidungen wie Vogelkot oder dergleichen hergestellt werden, die eingesammelt werden und ein flockiges, trockenes Schüttgut bilden. Aus dem Schüttgut wird dann mittels geeigneter Herstellungsverfahren der Harnstoff gewonnen. Insbesondere in ärmeren Gebieten der Erde soll die Herstellung des Harnstoffs zur Verwendung als Düngemittel besonders effizient und kostengünstig erfolgen. Üblicherweise sind für die Harnstoffproduktion entsprechende Produktionsanlagen vorgesehen, die in einer Halle oder dergleichen Gebäude untergebracht sind. Ein wesentlicher Faktor zur Steigerung der (Kosten-)Effizienz der Harnstoffproduktion ist der Transport des Schüttguts, also des ursprünglichen Ausscheidungsmaterials wie Vogelkot, zu der eigentlichen Produktionsanlage. Bekannte Harnstoffproduktionsanlagen bieten keine zufriedenstellenden Lösungen zur Effizienzsteigerung und Kostenminimierung.

Der vorliegenden Erfindung liegt daher die Aufgabe zugrunde, kostengünstige Mittel bereit zu stellen, die eine höhere Effizienz und eine Minimierung von Kosten beim Transport von Schüttgut zu einer Verarbeitungsanlage für das Schüttgut schaffen. Zur Lösung dieser Aufgabe wird eine Schüttgut-Fördereinheit mit den Merkmalen des Anspruchs 1 vorgeschlagen. Die erfindungsgemäße Schüttgut-Fördereinheit weist eine in eine Bodenausnehmung einsetzbare ein- oder mehrteilige Kassette aus Stahl oder dergleichen auf, mit zwei Längsseitenwänden, endseitig angeordneten Stirnseitenwänden und mit einem Boden. Darüber hinaus weist die Kassette eine dem Boden gegenüberliegende Zugangsöffnung auf, die einen Zugang zum Inneren der Kassette schafft. Weiterhin weist die Schüttgut-Fördereinheit einen in der Kassette angeordneten Schüttgutaufnahmebehälter zur Aufnahme von Schüttgut auf. Das Schüttgut ist über die Zugangsöffnung der Kassette maschinell oder manuell in den Schüttgutaufnahmebehälter zuführbar. Schließlich ist gemäß der Erfindung wenigstens ein Fördermittel, insbesondere mindestens eine Förderspindel zum Transport von in dem Schüttgutaufnahmebehälter befindlichem Schüttgut, wobei der Transport im Wesentlichen entlang einer Längsrichtung in der Kassette erfolgt.

Der Kerngedanke der Erfindung liegt darin, eine Schüttgut-Fördereinheit zur Förderung von Schüttgut zu einer Verarbeitungsanlage bereitzustellen, die herstellerseitig vollständig zur Verschiffung und Montage vor Ort vorbereitet und zertifiziert wird. Am Ort der jeweiligen Produktionsstätte zur Verarbeitung von Schüttgut, insbesondere zu Harnstoff, ist es dann lediglich notwendig, die Schüttgut-Fördereinheit auf ein entsprechendes Fundament in eine vorbereitete Bodenausnehmung einzubringen und durch geeignete Mittel mit der Weiterverarbeitungsanlage des Schüttgutes zu verbinden. Auf diese Weise ist die Montage der Schüttgut-Fördereinheit denkbar einfach. Es versteht sich, dass die Schüttgut-Fördereinheit gemäß der Erfindung nicht nur für den Transport von tierischen Ausscheidungen geeignet ist. Vielmehr ist die Schüttgut-Fördereinheit für jede Art von Schüttgut geeignet, das zu einer Weiterverarbeitungsanlage innerhalb einer Halle oder dergleichen Gebäude befördert werden muss.

Die vorliegende Erfindung ermöglicht darüber hinaus eine einfache Förderung von Schüttgut von der Abladestelle des Schüttguts in ein Gebäude hinein. Dadurch kann die Abladestelle des Schüttguts außerhalb des Gebäudes vorgesehen sein, in dem das Schüttgut weiterverarbeitet wird. Die Schüttgut-Fördereinheit ist darüber hinaus vergleichsweise kostengünstig herstellbar und robust ausgebildet, sodass sie auch in Gebieten mit schwierigen klimatischen Verhältnissen zum Einsatz kommen kann.

Vorzugsweise ist die Schüttgut-Fördereinheit so ausgebildet, dass die Zugangsöffnung, durch die das Schüttgut in den Schüttgutaufnahmebehälter befördert wird, durch die oberen Ränder der Längsseitenwände und der Stirnseitenwände begrenzt wird. Die Zugangsöffnung muss sich aber nicht über die gesamte Oberseite der Kassette erstrecken. Es ist im Prinzip ausreichend, wenn im Bereich des Schüttgutaufnahmebehälters eine Zugangsöffnung vorgesehen ist.

Ein erster Teil der Kassette ist vorzugsweise außerhalb eines Gebäudes, in dem das Schüttgut weiterverarbeitet wird, und ein zweiter Teil der Kassette innerhalb des Gebäudes anordenbar. Der Schüttgutaufnahmebehälter ist zweckmäßigerweise in dem ersten Teil der Kassette angeordnet, der außerhalb des Gebäudes anordenbar ist, sodass Schüttgut von außerhalb des Gebäudes in die Schüttgut-Fördereinheit gegeben werden kann und in der Kassette in das Gebäude hinein transportiert werden kann. Hierzu kann die Kassette in eine Bodenausnehmung eingesetzt werden, die sich unter einer Gebäudewand hindurch erstreckt, sodass die Kassette in ihrer Querrichtung durch eine gedachte Ebene geschnitten wird, in der die Gebäudewand angeordnet ist. Besonders vorteilhaft ist es noch, wenn die Kassette derart in die Bodenausnehmung einsetzbar ist, dass die Gebäudewand im Wesentlichen an die oberen Ränder der Längsseitenwände angrenzt. Die Gebäudewand kann dann im Wesentlichen mit der Längsseitenwand abschließen.

Der Schüttgutaufnahmebehälter ist vorzugsweise trichterförmig ausgebildet und an oder zumindest im Bereich der Längsseitenwände der Kassette, insbesondere an den oberen Rändern der Längsseitenwände befestigt. Denkbar ist prinzipiell jedoch auch eine Befestigung unmittelbar an den Längsseitenwänden, an den Stirnseitenwänden oder am Boden der Kassette. Zwischen der Gebäudewand und dem Schüttgutaufnahmebehälter kann eine fest installierte Zwischenabdeckung der Kassette vorgesehen sein. Weiterhin kann der Schüttgutaufnahmebehätter mit einer Abdeckung, insbesondere mittels einer an dem Schüttgutaufnahmebehälter schwenkbar gelagerten Klappe verschließbar sein.

Ein Ende des mindestens einen Fördermittels und insbesondere der Förderspindel wirkt vorzugsweise mit einem dem Boden der Kassette zugewandten offenen Bereich des Schüttgutaufnahmebehälters zusammen. Zur Steigerung des Fördervolumens können auch zwei im Wesentlichen parallel zueinander angeordnete Förderspindeln vorgesehen sein, die Schüttgut aus dem Schüttgutaufnahmebehälter innerhalb der Kassette transportieren. Die beiden Förderspindeln wirken vorzugsweise an ihrem dem Schüttgutaufnahmebehälter abgewandten Ende mit einer Anschlussförderspindel zusammen, wobei die Anschlussförderspindel als Doppelspindel ausgebildet sein kann und ebenfalls ein Teil des Fördermittels bilden kann.

Um das Schüttgut, vorzugsweise innerhalb des Gebäudes, aus der Kassette zu befördern, kann ein Becherwerk in der Kassette vorgesehen ist, welches im Bereich des dem Schüttgutaufnahmebehälter gegenüberliegenden Endes der mindestens einen Förderspindel oder der Anschlussförderspindel vorgesehen ist und das zur Aufnahme und zum Transport von Schüttgut aus der Kassette heraus zu einer Weiterverarbeitungsvorrichtung dient. Auch das Becherwerk kann einen Teil des Fördermittels der Schüttgut-Fördereinheit bilden.

Die Kassette ist vorzugsweise so ausgestaltet, dass zumindest die Längsseitenwände eine Innenwandung und eine im Abstand davon angeordnete Außenwandung umfassen, die einen Hohlraum begrenzen, in den ein aushärtbares Füllmaterial einfüllbar ist. Weiterhin kann zumindest der erste, außerhalb des Gebäudes anordenbare Teil der Kassette zumindest bereichsweise mit einer Abdeckung verschließbar sein. Die Abdeckung kann rollladenartig ausgebildet und in einer in der Kassette befindlichen Speichereinheit aufnehmbar sein, wobei die Speichereinheit vorteilhafter Weise zwischen einer Stirnseitenwand der Kassette und dem Schüttgutaufnahmebehälter angeordnet ist.

Die Erfindung wird im Folgenden anhand der Zeichnung näher erläutert. Es zeigen:
- Fig. 1: eine schematische Schnittdarstellung in einer Längsrichtung einer Schüttgut-Fördereinheit gemäß der Erfindung;
- Fig, 2: eine schematische Draufsicht auf die Schüttgut-Fördereinheit, und
- Fig. 3: eine Stirnseitenansicht der Schüttgut-Fördereinheit.

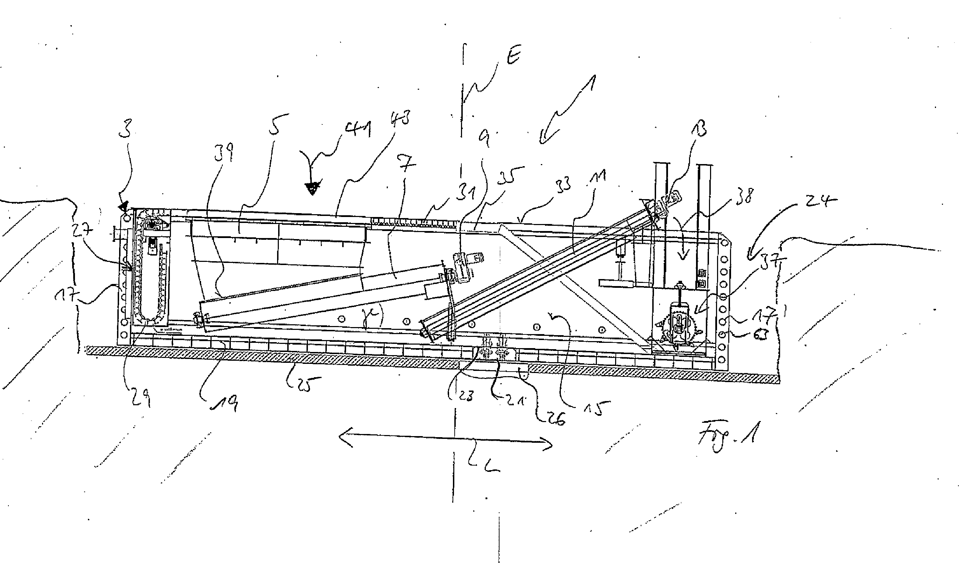

Fig. 1 zeigt eine Schüttgut-Fördereinheit 1, die eine ein- oder mehrteilig ausgebildete Kassette 3, einen Schüttgutaufnahmebehälter 5 und Fördermittel in Form von zwei Förderspindeln aufweist, von denen in Fig. 1 nur eine Förderspindel 7 erkennbar ist. Die Förderspindel 7 wird durch einen Elektromotor 9 angetrieben und wirkt mit einer Anschlussförderspindel 11 zusammen, die hier beispielhaft als Doppelspindel ausgebildet ist und die ebenfalls durch einen Elektromotor 13 angetrieben wird. Förderspindeln der hier angesprochenen Art sind im Stand der Technik vielfach beschrieben, sodass hier nicht näher auf deren Funktionsweise eingegangen werden soll.

Die Kassette 3 ist quaderförmig ausgebildet und umfasst zwei im Wesentlichen parallel zueinander angeordnete Längsseitenwände, die sich in einer Längsrichtung L erstrecken und von denen hier nur eine Längsseitenwand 15 erkennbar ist. Weiterhin weist die Kassette 3 zwei jeweils endseitig angeordnete Stirnseitenwände 17 und 17' auf sowie einen Boden 19, der eine Vertiefung 21 umfasst, die nach oben hin offen ist und durch einen Gehrost 23 abgedeckt ist. In der Vertiefung 21 können Leitungen zur Entsorgung von Wasser, Öl oder dergleichen vorgesehen sein.

Die Kassette 3 ist in der Fig. 1 in einer Bodenausnehmung 24 angeordnet, in der ein Sohlplatte 25 bzw. eine Betonsohle vorgesehen ist. Nach dem Einsetzen und der Montage der Schüttgut-Fördereinheit 1 wird die Bodenausnehmung 24 um die Kassette 3 herum mit Erdreich aufgeschüttet. Die Kassette 3 ist auf der Sohlplatte 25 angeordnet. Die Druckfestigkeit der Sohlplatte muss groß genug sein, um dem Druck der Kassette 3 stand zu halten. Darüber hinaus weist die Sohlplatte 25 vorzugsweise eine Aussparung 26 für den mit der Vertiefung im Boden 19 zusammenwirkenden Pumpensumpf auf. Die Mindestdicke der Sohlplatte 25 beträgt vorzugsweise 20 - 30 cm. Sie kann bewehrt oder unbewehrt ausgeführt sein.

Zwischen der Stirnseitenwand 17 und dem Schüttgutaufnahmebehälter 5 ist eine Speichereinheit 27 vorgesehen, in der eine Abdeckung 29 nach Art eines Rollladens unterbringbar ist. Die Abdeckung kann automatisch oder manuell aus der Speichereinheit entlang der oberen Ränder 33 über die Kassette 3 verlagert werden, sodass die Abdeckung sich zumindest bereichsweise, insbesondere bis zu einer fest installierten Zwischenabdeckung 31, über die Kassette 3 erstreckt und diese insbesondere vor Witterungseinflüssen schützt, wenn die Schüttgut-Fördereinheit 1 nicht in Betrieb ist.

Von dem oberen Rand 33 der Längsseitenwand 15 aus erstreckt sich noch eine Treppe 35 bis zu dem Boden 19 der Kassette 3, die es einer Person ermöglicht, in die Kassette 3 hinab zu steigen, beispielsweise um Wartungsarbeiten oder dergleichen durchzuführen.

In einem Stirnseitenwand 17' nahen Bereich ist in der Kassette noch ein Becherwerk 37 vorgesehen, welches im Bereich des dem Schüttgutaufnahmebehälter 5 gegenüberliegenden Endes der Anschlussförderspindel 11 vorgesehen ist. Das Becherwerk 37 wirkt mit der Anschlussförderspindel 11 zusammen und dient zur Aufnahme und zum Transport von Schüttgut aus der Kassette 3 heraus zu einer hier nicht gezeigten Weiterverarbeitungsvorrichtung. Wie gesagt kann das Becherwerk Teil des Fördermittels sein.

Fig. 1 macht deutlich, dass die Förderspindeln 15 und insbesondere ein Ende der Förderspindeln mit einem dem Boden 19 der Kassette 3 zugewandten Bereich 39 des Schüttgutaufnahmebehälters 5 zusammenwirken. Hierzu ist der Schüttgutaufnahmebehälter 5 wie in der Fig. 1 gezeigt vorzugsweise trichterförmig ausgebildet bzw. in der Längsrichtung L zu der Stirnseitenwand 17 hin abfallend ausgebildet, sodass sich in dem Schüttgutaufnahmebehälter befindliches Schüttgut in dem Bereich 39 sammelt. Der Schüttgutaufinahmebehälter 5 weist in dem Bereich 39 vorzugsweise eine hier nicht erkennbare Öffnung auf, durch die das Schüttgut zu den Förderspindeln 15 gelangen kann.

Das Schüttgut wird in Richtung des Pfeils 41 über eine Zugangsöffnung 43 der Kassette 3 in den Schüttgutaufnahmebehälter 5 geschüttet, wobei das Einschütten maschinell, also beispielsweise mittels eines LKW oder manuell, also beispielsweise durch das händische hineinkippen von mit Schüttgut gefüllten Säcken, Schubkarren oder dergleichen bewerkstelligt werden kann. Die Zugangsöffnung 43 wird vorzugsweise durch die oberen Ränder 33 der Längsseitenwände 15 und der Stirnseitenwände 17, 17' begrenzt. In dem gezeigten Ausführungsbeispiel der Erfindung wird die Zugangsöffnung 43 durch die oberen Ränder 33 der Längsseitenwände 15, eine Stirnseitenwand 17 und durch die fest installierte Abdeckung 31 begrenzt. Es versteht sich, dass die Zwischenabdeckung 31 auch lösbar von der Kassette 3 ausgebildet sein kann. Anders ausgedrückt unterbricht die Zwischenabdeckung 31 die Zugangsöffnung 43 der Kassette 3.

Die Förderspindeln 7 sind so ausgebildet, dass sie sich im Wesentlichen in der Längsrichtung L der Kassette 3 ausgehend von dem Schüttgutaufnahmebehälter 5 erstrecken, wobei sie im Wesentlichen der abfallenden Unterseite des Schüttgutaufnahmebehälters 5 folgen und vorzugsweise an dem Schüttgutaufnahmebehälter befestigt sind. Dementsprechend sind die Förderspindeln 7 unter einem Winkel γ bezüglich des Bodens 19 angeordnet.

Die Förderspindeln 7 geben das Schüttgut an die Anschlussförderspindel 11 weiter, die an ihrem einen Ende zwischen den Förderspindeln 7 und dem Boden 19 angeordnet ist. Wie die Förderspindeln 7 erstreckt sich auch die Anschlussförderspindel 11 in der Längsrichtung L in der Kassette 3 unter einem Winkel ϕ bezüglich des Bodens 19. Die Anschlussförderspindel 11 erstreckt sich im Wesentlichen bis zu der Stirnseitenwand 17', wo das den Förderspindeln 7 gegenüberliegende Ende der Anschlussförderspindel 11 mit dem Becherwerk 37 zusammenwirkt und insbesondere das Schüttgut an das Becherwerk 37 abgibt, was durch den Pfeil 38 angedeutet ist. Mittels des Becherwerks 37 kann das Schüttgut dann vollautomatisch aus der Kassette 3 hinaus zu der Weiterverarbeitungsanlage des Schüttguts befördert werden.

Die in Fig. 1 dargestellte Anordnung ist insbesondere in Bezug auf die Förderspindeln rein beispielhaft. Ebenso können mehr als zwei oder drei Förderspindeln vorgesehen sein. Denkbar ist es auch, lediglich eine Förderspindel vorzusehen, die sich im Wesentlichen über die gesamt Länge der Kassette 3 erstreckt.

Die Fig. 1 macht noch deutlich, dass der Schüttgutaufnahmebehälter 5 im Wesentlichen in einem Stirnseitenwand 17 nahen Bereich angeordnet ist und das Schüttgut von dort aus mit Hilfe des Fördermittels, insbesondere mittels Förderspindeln zu dem gegenüberliegenden Stirnseitenwand nahen Bereich der Kassette 3 befördert wird.

Die Fördermittel zur Beförderung des Schüttguts in der Kassette 3 müssen im Übrigen nicht als Förderspindeln ausgebildet sein. Denkbar ist auch die Verwendung von Förderbändern oder dergleichen Fördermittel. Auch das Becherwerk 37 muss nicht zwingend vorgesehen sein. Denkbar ist es genauso, das Schüttgut unmittelbar durch das Fördermittel oder auf andere Weise, beispielsweise mittels Druckluftleitungen oder dergleichen aus der Kassette 3 zu entfernen.

Entscheidend ist lediglich, dass das Schüttgut innerhalb der Kassette 3 von einer Schüttgutaufnahmestelle (Schüttgutaufnahmebehälter 5) an einem ersten Ende (Stirnseitenwand 17) der Kassette 3 zu einer Schüttgutabgabestelle (Becherwerk 37) an einem zweiten Ende (Stirnseitenwand 17') der Kassette 3 vollautomatisch befördert wird.

Die Länge der Kassette 3 und damit die Förderstrecke des Schüttguts innerhalb der Kassette kann selbstverständlich an den jeweiligen Verwendungszweck angepasst werden. Bei längeren Ausführungsformen der Kassette 3, die einen Straßentransport nicht mehr erlauben, kann eine modulare Ausführung der Kassette 3 vorgesehen sein. Die Kassettenmodule können dann an Ort und Stelle miteinander auf geeignete Weise verbunden werden.

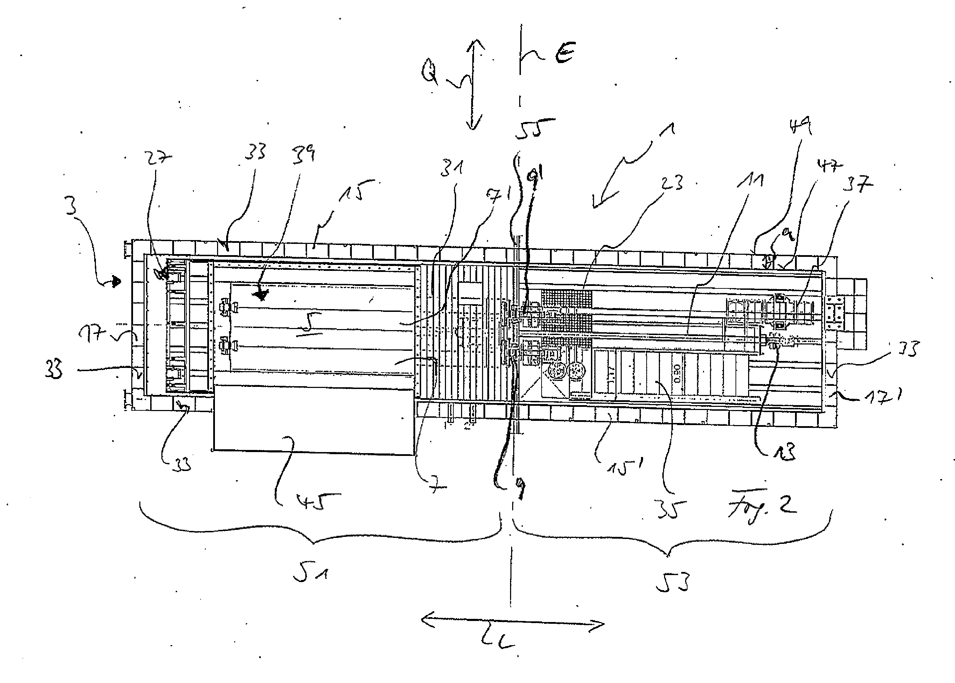

Fig. 2 zeigt eine schematische Draufsicht auf eine Schüttgut-Fördereinheit 1 gemäß der Erfindung. Gleiche Teile sind mit gleichen Bezugszeichen versehen, sodass insofern auf die Beschreibung zu Fig. 1 verwiesen wird, um Wiederholungen zu vermeiden.

Fig. 2 macht deutlich, dass der Schüttgutaufnahmebehälter 5 im Wesentlichen im Bereich des oberen Randes 33 an den Längsseitenwänden 15 und 15' befestigt ist. Die Kassette 3 ist auf der dem Boden 19 gegenüberliegenden Seite offen (Zugangsöffnung 43) und erlaubt so einerseits den Einstieg einer Person über die Treppe 35 in die Kassette 3 und andererseits den Zugang zu dem Schüttgutaufnahmebehälter 5.

Im Bereich des oberen Rands 33 der Längsseitenwand 15' ist der Schüttgutaufnahmebehälter 5 mit einer Abdeckung in Form einer schwenkbar befestigten Klappe 45 versehen. Wenn Schüttgut in den Schüttgutaufnahmebehälter 5 gefüllt werden soll, wird die Klappe zu diesem Zweck geöffnet. Schüttgut wird vorzugsweise von der der Klappe 45 gegenüberliegenden Seite in den Schüttgutaufnahmebehälter 5 gefüllt. Zu diesem Zweck kann beispielsweise eine LKW an die Kassette 3 heranfahren und Schüttgut in den Schüttgutaufnahmebehälter 5 kippen. Während des Schüttvorgangs dient die Klappe 45 gleichzeitig als Schüttgutabweiser,

Durch die geöffnete Klappe 45 ist in Fig. 2 der Bereich 39 des Schüttgutaufnahmebehälters 5 erkennbar, in den sich die Förderspindeln 7 und 7' erstrecken.

Zumindest die Längsseitenwände 15 und 15' der Kassette 3 umfassen eine Innenwandung 47 und eine im Abstand a davon angeordnete Außenwandung 49, die einen Hohlraum begrenzen. In den Hohlraum ist ein aushärtbares Füllmaterial einfüllbar, um ein Auslaufen von Flüssigkeit aus der Kassette 3 zu verhindern und um umgekehrt zu verhindern, dass Flüssigkeit in die Kassette 3 eindringt.

Besonders vorteilhaft ist die in Fig. 2 dargestellte Schüttgut-Fördereinheit 1, weil ein erster Teil 51 der Schüttgut-Fördereinheit 1, insbesondere der Kassette 3 außerhalb eines nicht dargestellten Gebäudes und ein zweiter Teil 53 der Kassette 3 innerhalb des Gebäudes in einer Bodenausnehmung anordenbar ist. Bei einem Gebäude der hier angesprochenen Art handelt es sich um eine Halle oder dergleichen Gebäude, in welchem die Weiterverarbeitung des Schüttguts durch geeignete Verarbeitungsvorrichtungen stattfindet, Falls es sich bei dem Schüttgut um ein flockiges, trockenes Material und insbesondere um tierische Ausscheidungen zur Herstellung von Harnstoff handelt, ist in dem Gebäude eine entsprechende Weiterverarbeitungsvorrichtung zur Erzeugung von Harnstoff aus dem Schüttgut vorgesehen.

Die Fig. 2 macht deutlich, dass der Schüttgutaufnahmebehälter 5 in dem ersten Teil 51 der Kassette 3 angeordnet ist, also in dem außerhalb des Gebäudes anordenbaren Teil der Kassette 3. Die Kassette 3 wird durch eine gedachte Ebene E gedanklich in den ersten Teil 51 und den zweiten Teil 53 aufgeteilt, in der eine Gebäudewand 55 angeordnet ist. Die Schüttgutabgabestelle, an der das Schüttgut aus der Kassette 3 entnommen wird, befindet sich im zweiten Teil 53 der Kassette 3, also in dem im Gebäude befindlichen Teil.

Die Kassette 3 ist in eine Bodenausnehmung einsetzbar, die sich unter der Gebäudewand 55 hindurch erstreckt, sodass die Kassette 3 in ihrer Querrichtung Q durch die gedachte Ebene E geschnitten wird, in der die Gebäudewand 55 angeordnet ist. Vorzugsweise ist die Kassette 3 derart in die Bodenausnehmung einbringbar, dass die Gebäudewand 55 an den oberen Rand 33 der Längsseitenwände 15, 15' angrenzt und mit diesem abschließt.

In Fig. 2 ist noch erkennbar, dass die feste Zwischenabdeckung 31 einerseits an die Gebäudewand 55 und andererseits an den Schüttgutaufnahmebehälter 5 angrenzt. Durch die Zwischenabdeckung 31, die Klappe 45 und die rollladenähnliche Abdeckung 29 der Kassette 3 kann somit der außerhalb des Gebäudes anordenbare Teil der Kassette 3 vollständig geschlossen werden, wenn die Schüttgut-Fördereinheit 1 nicht in Betrieb ist, um diese vor Regenfall oder Verschmutzung zu schützen. Eine entsprechende Abdeckung kann auch für den zweiten Teil 53 der Kassette 3 vorgesehen sein.

Die Abdeckung 45 ist vorzugsweise derart ausgebildet, dass der Schüttgutaufnahmebehälter 5 durch ein Fahrzeug befahrbar ist, wenn die Klappe 45 geschlossenen ist. Auch die Zwischenabdeckung 31 und die rollladenähnliche Abdeckung 29 der Kassette 3 sind vorzugsweise so stabil ausgebildet, dass sie mittels eines Fahrzeugs, insbesondere mittels eines LKW befahrbar sind.

Um die Schüttgut-Fördereinheit 1 auch in Umgebungen mit einer relativ hohen Luftfeuchtigkeit einsetzen zu können ist es notwendig, dass sämtliche Teile der Schüttgutfördereinheit 1 aus hoch korrosionsbeständigem Material, insbesondere aus Edelstahl bestehen. Der verwendete Edelstahl weist vorzugsweise einen Chrom-Anteil von über 16% auf, um den klimatischen Anforderungen gerecht zu werden. Ein Beispiel für einen derartigen Edelstahl ist V4 A1.4571 Stahl. Denkbar ist grundsätzlich auch die Verwendung von Grauguss bzw. graues Gusseisen, der entsprechend der Korrosionsschutzanforderung der Kategorie C2 korrosionsbeständig beschichtet ist. Die Korrosionsschutzanforderung der Kategorie C2 ist in der Normenreihe DIN EN 12944 zu finden ("Korrosionsschutz von Stahlbauteilen durch Beschichtungssysteme"). Beispielsweise können die Gehäuse der Elektromotoren oder auch andere Bauteile aus korrosionsbeständig beschichtetem Grauguss hergestellt werden.

Die Schüttgut-Fördereinheit 1 besteht also vorzugsweise vollständig aus Edelstahl, also insbesondere auch die Kassette 3, der Schüttgutaufnahmebehälter 5, die Fördermittel, sämtliche Abdeckungen 45, 29 und 31, die Treppe 35, die Elektromotoren, insbesondere deren Gehäuse, Bodenverankerungen usw.. Dadurch ist die Schüttgut-Fördereinheit 1 besonders robust ausgebildet und auch in Gebieten mit problematischen Klimabedingungen einsetzbar, beispielsweise in tropischen Gebieten oder in Gebieten mit einer salzwasserhaltigen Umgebung.

Dadurch, dass sich die Schüttgut-Fördereinheit 1 im Erdreich unter einer Gebäudewand 55 hindurch erstrecken kann, ist es in vorteilhafter Weise möglich, außerhalb des Gebäudes Schüttgut in den Schüttgutaufnahmebehälter 5 zu schütten, welches durch das/die Fördermittel quasi unterirdisch in der Kassette 3 in das Gebäude befördert wird. Dadurch ist es nicht mehr notwendig, das Schüttgut aufwändig beispielsweise von einem LKW zunächst auf ein anderes Transportmittel umzuladen und in das Gebäude zu befördern, sondern der LKW kann das Schüttgut einfach außerhalb des Gebäudes bei geöffneter Klappe 45 in den Schüttgutaufnahmebehälter 5 kippen, von wo aus das Schüttgut vollautomatisch mittels der Fördermittel zu der Weiterverarbeitungsvorrichtung in das Gebäude transportiert wird, ohne dass ein aufwändiges Umladen des Schüttguts notwendig ist.

Der Förderweg des Schüttguts in der Kassette 3 und damit die Länge der Kassette 3, kann nahezu beliebig angepasst werden, sodass die Schüttgutaufnahmestelle, d.h. die Position des Schüttgutaufnahmebehälters auch in einiger Entfernung von dem Gebäude angeordnet sein kann.

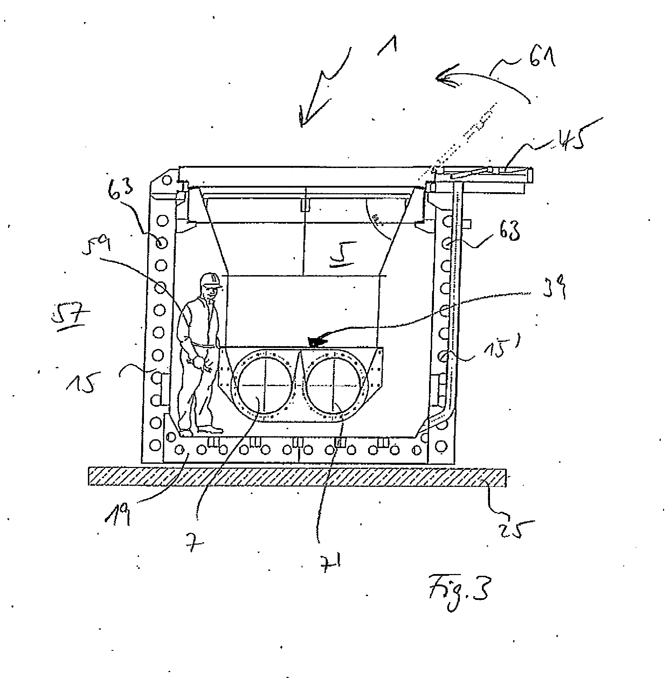

Fig. 3 zeigt eine schematische Stirnseitenansicht der Schüttgut-Fördereinheit 1. Gleiche Teile sind mit gleichen Bezugszeichen versehen, sodass insofern auf die Beschreibung zu den Fig. 1 und 2 verwiesen wird, um Wiederholungen zu vermeiden.

Die Schüttgut-Fördereinheit 1 ist im fertig montierten Zustand von Erdreich 57 umgeben. Innerhalb der Kassette 3 sind Stehgruben für eine Person 59 vorgesehen, die Wartungsarbeiten oder dergleichen an der Schüttgut-Fördereinheit 1 durchführen muss.

Der Pfeil 61 in Fig. 3 deutet die Schwenkbewegung der Klappe 45 an, wenn der Schüttgutaufnahmebehälter 5 verschlossen werden soll. Die Klappe 45 kann im Übrigen faltbar ausgebildet sein. Besonders vorteilhaft ist es, wenn Schüttgut von der Position gegenüber der Klappe 45 aus befüllt wird, also quasi entgegen der Richtung des Pfeils 61. Dadurch kann durch die Klappe 45 ein "Verschütten" von Schüttgut weitestgehend vermieden werden. Auf der Klappe 45 befindliche Reste von Schüttgut können durch ein Schließen der Klappe in den Schüttgutaufnahmebehälter 5 befördert werden.

Besonders deutlich erkennbar ist in Fig. 3 die Trichterform des Schüttgutaufnahmebehälters 5, der in den Bereich 39 und die beiden Förderspindeln 7 und 7' mündet.

Fig. 3 macht noch deutlich, dass die Längsseitenwände 15, 15' und der Boden 19 Zwischenstege mit Hohlräumen bzw. Durchgangsöffnungen 63 umfassen. Aus Fig. 1 wird deutlich, dass auch die Stirnseitenwände 17, 17' über derartige Durchgangsöffnungen 63 verfügen. Die Durchgangsöffnungen 63 der Längsseitenwände 15, 15', der Stirnseitenwände 17, 17' und des Bodens 19 sind vorzugsweise über Eck miteinander verbunden. In die Durchgangsöffnungen kann ein Füllmaterial, insbesondere Leichtbeton oder dergleichen eingefüllt werden, welcher sich durch die Übereck-Verbindungen in den Längs- und Stirnseitenwänden sowie im Boden verteilen kann.

Insgesamt zeigt sich somit, dass die vorliegende Erfindung die Effizienz einer Schüttgutbeförderung zu einer Verarbeitungsanlage in einem Gebäude erheblich steigert, da das Schüttgut außerhalb des Gebäudes einfach in den Schüttgutaufnahmebehälter geschüttet werden kann und von dort aus vollautomatisch zu der Weiterverarbeitungsanlage des Schüttguts unter der Gebäudewand hindurch in das Gebäude weitertransportiert wird.

### Bezugszeichenliste:

- 1: Schüttgut-Fördereinheit
- 3: Kassette
- 5: Schüttgutaufnahmebehälter
- 7, 7': Förderspindeln
- 9: Elektromotor
- 11: Anschlussförderspindel
- 13: Elektromotor
- 15, 15': Längsseitenwand
- 17, 17': Stirnseitenwand
- 19: Boden
- 21: Vertiefung
- 23: Gehrost
- 24: Bodenausnehmung
- 25: Sohlplatte
- 26: Aussparung
- 27: Speichereinheit
- 29: Abdeckung
- 31: Zwischenabdeckung
- 33: oberer Rand
- 35: Treppe
- 37: Becherwerk
- 38: Pfeil
- 39: Bereich
- 41: Pfeil
- 43: Zugangsöffnung
- 45: Klappe
- 47: Innenwandung
- 49: Außenwandung
- 51: erster Teil
- 53: zweiter Teil
- 55: Gebäudewand
- 57: Erdreich
- 59: Person
- 61: Pfeil
- 63: Durchgangsöffnung
- Q: Querrichtung
- E: Ebene
- A: Abstand
- γ: Winkel
- ϕ: Winkel
- L: Längsrichtung

## Patentansprüche

1. Schüttgut-Fördereinheit (1), aufweisend:
- eine in eine Bodenausnehmung (24) einsetzbare ein- oder mehrteilige Kassette (3) aus Stahl oder dergleichen, mit zwei Längsseitenwänden (15,15'), endseitig angeordneten Stirnseitenwänden (17,17'), einem Boden (19), sowie mit einer dem Boden gegenüberliegenden Zugangsöffnung (43) zum Inneren der Kassette (3);
- einen in der Kassette (3) angeordneten Schüttgutaufnahmebehälter (5) zur Aufnahme von Schüttgut, welches durch die Zugangsöffnung (43) der Kassette (3) maschinell oder manuell zuführbar ist, und
- wenigstens ein Fördermittel zum Transport von in dem Schüttgutaufnahmebehälter (5) befindlichem Schüttgut im Wesentlichen entlang einer Längsrichtung (L) der Kassette (3).

2. Schüttgut-Fördereinheit nach Anspruch 1, **dadurch gekennzeichnet, dass** die Zugangsöffnung (43) durch die oberen Ränder der Längsseitenwände (L) und der Stirnseitenwände (17,17') begrenzt wird.

3. Schüttgut-Fördereinheit nach Anspruch 1 oder 2, **dadurch gekennzeichnet, dass** ein erster Teil (51) der Kassette (3) außerhalb eines Gebäudes und ein zweiter Teil (53) der Kassette (3) innerhalb eines Gebäudes anordenbar ist.

4. Schüttgut-Fördereinheit nach Anspruch 3, **dadurch gekennzeichnet, dass** der Schüttgutaufnahmebehälter (5) in dem ersten Teil (51) der Kassette (3) angeordnet ist, der außerhalb des Gebäudes anordenbar ist.

5. Schüttgut-Fördereinheit nach Anspruch 3 oder 4, **dadurch gekennzeichnet, dass** die Kassette (3) in eine Bodenausnehmung einsetzbar ist, die sich unter einer Gebäudewand (55) hindurch erstreckt, sodass die Kassette (3) in ihrer Querrichtung (Q) durch eine gedachte Ebene (E) geschnitten wird, in der die Gebäudewand (55) angeordnet ist.

6. Schüttgut-Fördereinheit nach Anspruch 5, **dadurch gekennzeichnet, dass** die Kassette (3) derart in die Bodenausnehmung einsetzbar ist, dass die Gebäudewand (55) im Wesentlichen an die oberen Ränder (33) der Längsseitenwände (15,15') angrenzt.

7. Schüttgut-Fördereinheit nach einem der vorhergehenden Ansprüche, **dadurch gekennzeichnet, dass** die Kassette (3) auf einer in der Bodenausnehmung vorgesehenen Sohlplatte (25) anordenbar ist.

8. Schüttgut-Fördereinheit nach einem der vorhergehenden Ansprüche, **dadurch gekennzeichnet, dass** der Schüttgutaufnahmebehälter (5) an den Längsseitenwänden (15,15') der Kassette (3), insbesondere an den oberen Rändern (33) der Längsseitenwände (15,15') befestigt ist.

9. Schüttgut-Fördereinheit nach Anspruch 8, **dadurch gekennzeichnet, dass** zwischen der Gebäudewand (55) und dem Schüttgutaufnahmebehälter (5) eine fest installierte Zwischenabdeckung (31) der Kassette (3) vorgesehen ist.

10. Schüttgut-Fördereinheit nach einem der vorhergehenden Ansprüche, **dadurch gekennzeichnet, dass** das wenigstens eine Fördermittel eine Förderspindel (7,7') ist.

11. Schüttgut-Fördereinheit nach Anspruch 10, **dadurch gekennzeichnet, dass** ein Ende der mindestens einen Förderspindel (7,7') mit einem dem Boden der Kassette (3) zugewandten Bereich (39) des Schüttgutaufnahmebehälters (5) zusammenwirkt.

12. Schüttgut-Fördereinheit nach einem der vorhergehenden Ansprüche, **dadurch gekennzeichnet, dass** der Schüttgutaufnahmebehälter (5) trichterförmig ausgebildet ist.

13. Schüttgut-Fördereinheit nach einem der vorhergehenden Ansprüche 10 bis 12, **dadurch gekennzeichnet, dass** zwei im Wesentlichen parallel zueinander angeordnete Förderspindeln (7,7') vorgesehen sind, die Schüttgut aus dem Schüttgutaufnahmebehälter (5) innerhalb der Kassette (3) transportieren.

14. Schüttgut-Fördereinheit nach Anspruch 13, **dadurch gekennzeichnet, dass** die beiden Förderspindeln (7,7') an ihrem dem Schüttgutaufnahmebehälter (5) abgewandten Ende mit einer Anschlussförderspindel (11) zusammenwirken.

15. Schüttgut-Fördereinheit nach Anspruch 14, **dadurch gekennzeichnet, dass** die Anschlussförderspindel (11) als Doppelspindel ausgebildet ist.

16. Schüttgut-Fördereinheit nach einem der vorhergehenden Ansprüche, **dadurch gekennzeichnet, dass** ein Becherwerk (37) in dem innerhalb des Gebäudes anordenbaren zweiten Teil (53) der Kassette (3) vorgesehen ist, welches im Bereich des dem Schüttgutaufnahmebehälter (5) gegenüberliegenden Endes der mindestens einen Förderspindel (7,7') oder der Anschlussförderspindel (11) vorgesehen ist und das zur Aufnahme und zum Transport von Schüttgut aus der Kassette (3) heraus zu einer Weiterverarbeitungsvorrichtung dient.

17. Schüttgut-Fördereinheit nach einem der vorhergehenden Ansprüche, **dadurch gekennzeichnet, dass** zumindest die Längsseitenwände (15,15') der Kassette (3) eine Innenwandung (47) und eine im Abstand (a) davon angeordnete Außenwandung (49) umfassen, die einen Hohlraum begrenzen.

18. Schüttgut-Fördereinheit nach einem der vorhergehenden Ansprüche, **dadurch gekennzeichnet, dass** in den Hohlraum ein aushärtbares Füllmaterial einfüllbar ist.

19. Schüttgut-Fördereinheit nach einem der vorhergehenden Ansprüche, **dadurch gekennzeichnet, dass** der Schüttgutaufnahmebehälter (5) mit einer Abdeckung, insbesondere mittels einer an dem Schüttgutaufnahmebehätter (5) schwenkbar gelagerten Klappe (45) verschließbar ist.

20. Schüttgut-Fördereinheit nach einem der vorhergehenden Ansprüche 3 bis 19, **dadurch gekennzeichnet, dass** zumindest der erste, außerhalb des Gebäudes anordenbare Teil (51) der Kassette (3) zumindest bereichsweise mit einer Abdeckung (29) verschließbar ist.

21. Schüttgur-Fördereinheit nach Anspruch 20, **dadurch gekennzeichnet, dass** die Abdeckung (29) rollladenartig ausgebildet ist und in einer in der Kassette (3) befindlichen Speichereinheit (27) aufnehmbar ist.

22. Schüttgut-Fördereinheit nach Anspruch 21, **dadurch gekennzeichnet, dass** die Speichereinheit (27) zwischen einer Stirnseitenwand (17) der Kassette (3) und dem Schüttgutaufnahmebehälter (5) angeordnet ist.
